# EUROPEAN PATENT SPECIFICATION

(11) **EP 3 550 160 B1**
(45) Date of publication and mention of the grant of the patent: **24.03.2021**
(21) Application number: 18189686.1
(22) Date of filing: 20.08.2018
(51) Int. Cl.: F16B 25/00, F16B 35/06

(54) **FASTENER**
BEFESTIGUNGSMITTEL
PIÈCE DE FIXATION

(43) Date of publication of application: 09.10.2019
(73) Proprietor: Taiwan Shan Yin International Co., Ltd., Kaohsiung City 806 (TW)
(72) Inventor: Su, Kou-Tsair, 806 Kaohsiung City (TW)
(74) Representative: Cabinet Chaillot

(56) References cited:
- EP-A1- 3 067 575
- US-A- 5 772 376

## Description

### BACKGROUND OF THIS INVENTION

### 1. Field of this invention

This invention relates to a fastener and relates particularly to a fastener allowing the head to fit flush with the workpiece to thereby ensure a perfect evenness and increase the fastening effect after the drilling operation is done.

### 2. Description of the Related Art

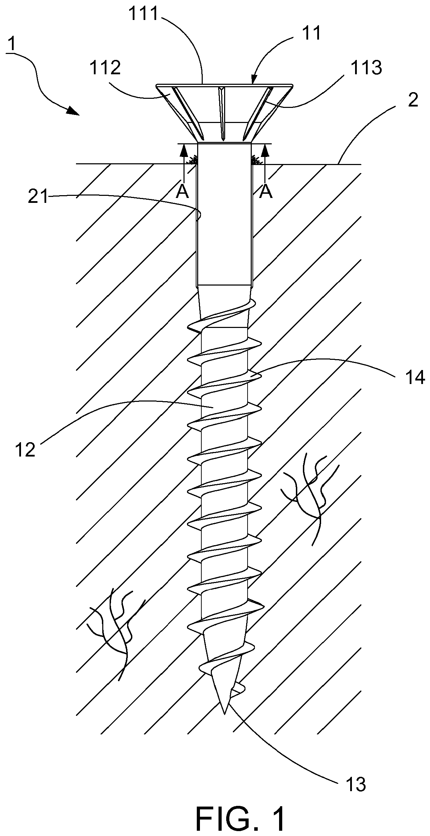

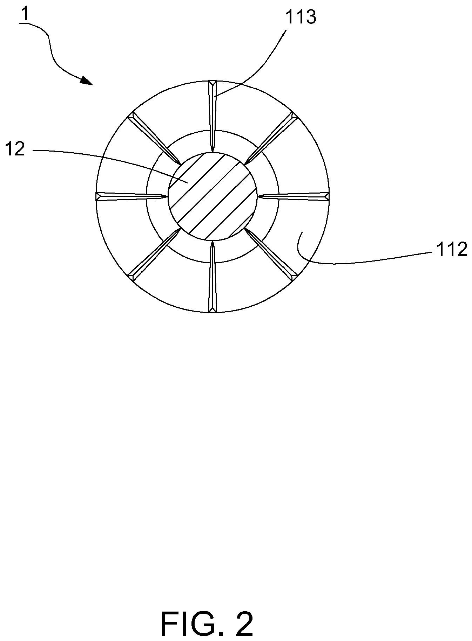

Referring to Figs. **1** and **2****,** a conventional screw **1** includes a shank **12,** a head **11** formed at one end of the shank **12,** a drilling portion **13** formed at the other end of the shank **12,** and threads **14** spirally disposed on the shank **12.** The head **11** has a top surface **111** and a conical underside **112** extending downwards from the top surface **111.** Spaced apart ribs **113** protrude from the underside **112** and extend fully from the top surface **111** to the shank **12.** Accordingly, when the drilling portion **13** punctures a workpiece **2** with fibers and rotates the head **11** with a tool (not shown), the threads **14** keep drilling into a bore **21** and cut fibers. When the underside **112** touches the workpiece **2,** the ribs **113** cut fibers and then the head **11** engages with the workpiece **2.**

Because the workpiece **2** is formed with resilient wooden fibers, the spaced apart ribs **113** can only lift up the fibers but cannot break the fibers into chips completely. This incurs a poor cutting effect. Burrs caused by the ejected fibers may also stick out from the surface of the workpiece **2** when the head **11** is gradually cutting its way into the workpiece **2**. The screw **1** does not provide any special arrangement to overcome the accumulation of the burrs, so the head **11** cannot fit flush with the surface of the workpiece **2** after the head **11** completes the drilling operation, and the fastening effect of the screw **1** is not good. Thus, the screw still needs improvement.

US 5772376 A and EP 3067575 A1 disclose a fastener according to the preamble of claim 1.

### SUMMARY OF THIS INVENTION

The object of this invention is to provide a fastener, as defined in claim 1, whose head can lie flush with the surface of the workpiece efficiently to promote the evenness after the drilling operation is done and increase the effect of fastening the fastener in position.

The fastener of this invention includes a head, a shank extending axially from the head and providing a drilling portion opposite to the head, and a threaded portion spirally disposed on the shank. The head has a top face and a conical bottom face extending from the top face to the shank. The head includes a plurality of cutting portions formed on the bottom face, a plurality of cutting ribs protruding from the bottom face, and a plurality of accommodation rooms formed between the plurality of cutting portions and the cutting ribs. Each of the cutting portions extends from the top face towards the shank and includes a projecting blade formed circumferentially of the top face at an outer edge thereof and extending in the direction of the shank, an adjoining wall and a flank wall respectively connected to the projecting blade and a cutting edge formed at a junction of the adjoining wall and the flank wall. A bottom edge on the flank wall is defined opposite to the cutting edge. Each of the adjoining walls extends from the cutting edge of one cutting portion to the bottom edge of the flank wall of another adjacent cutting portion so that each of the adjoining walls extends circumferentially along each of the projecting blades to thereby extend each of the plurality of accommodation rooms from each of the adjoining walls to the shank. The plurality of cutting ribs project from the bottom face and extend radially between the cutting portions and the shank to be directed at corresponding ones of the plurality of cutting portions. Each of the cutting ribs has two rib walls protruding from the bottom face and meeting at a rib edge. Accordingly, the cutting ribs help cut unbroken fibers coming from the threaded portion, and the cutting portions continue scraping the cut material off to enhance the cutting ability and reduce the drilling resistance. The accommodation rooms receive part of the cut material to provide a firm engagement between the head and the workpiece. Burrs or a bulge produced during the drilling operation can be fully pressed down by the projecting blade and captured within a bore of the workpiece to allow the head to lie flush with the surface of the workpiece and thus attain a good evenness, thereby increasing the drilling efficiency and the fastening effect.

Furthermore, the projecting blade decreases progressively in the direction of the shank, and concurrently the adjoining wall extends from the cutting edge of one cutting portion to the flank wall of another adjacent cutting portion to allow the cutting portions to connect one after another.

Preferably, in one embodiment, at least one cutting rib extends to be directed at a corresponding one of the cutting portions. In another embodiment, the cutting ribs extend respectively to be directed at part of the cutting portions so that the accommodation room can be extensively formed from the cutting portion to the shank and formed between two adjacent cutting ribs to provide an enlarged space which helps receive more chips.

Preferably, the threaded portion includes a first thread section spirally disposed on the drilling portion, a second thread section following the first thread section and formed in a wavy arrangement, and a third thread section following the second thread section. It is preferable that the second thread section has a second maximum outer diameter smaller than a third maximum outer diameter of the third thread section.

Preferably, threads of the second thread section are each provided with a plurality of notches.

Preferably, a helical portion can be formed between the threaded portion and the head to attain an anti-loosening effect.

Preferably, the rib walls of the cutting ribs are curved. It is also preferable that the adjoining wall is a curved wall to enlarge the space for receiving more chips.

### BRIEF DESCRIPTION OF THE DRAWINGS

Fig. 1 is a schematic view showing a conventional screw;
Fig. 2 is a bottom plan view taken on line A-A in Fig. 1;
Fig. 3 is a perspective view showing one variation of a first preferred embodiment of this invention;
Fig. 4 is an enlarged view showing the head of Fig. 3;
Fig. 5 is a bottom plan view taken on line B-B in Fig. 3;
Fig. 6 is a perspective view showing a further variation of the first preferred embodiment of this invention;
Fig. 7 is an enlarged view showing the head of Fig. 6;
Fig. 8 is a bottom plan view taken on line C-C in Fig. 6;
Figs. 9 to 11 are schematic views showing the fastener of this invention in use;
Fig. 12 is a front elevational view showing a second preferred embodiment of this invention;
Fig. 12A is an enlarged view of Fig. 12;
Fig. 13 is a front elevational view showing a third preferred embodiment of this invention; and
Fig. 13A is an enlarged view of Fig. 13.

### DETAILED DESCRIPTION OF THE PREFERRED EMBODIMENTS

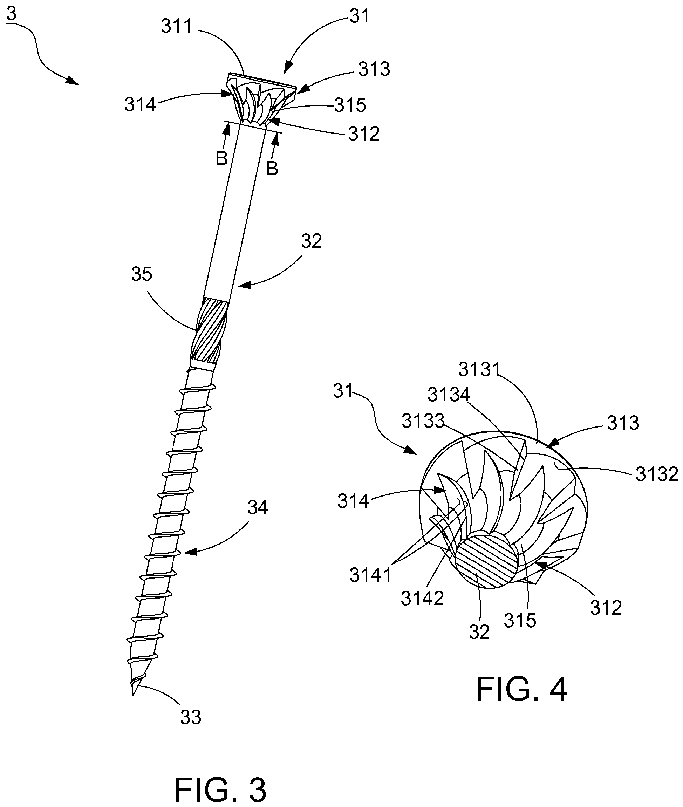

Referring to Figs. **3** to **5**, a fastener **3** of a first preferred embodiment of this invention includes a head **31**, a shank **32** extending axially from the head **31** and providing a drilling portion **33** opposite to the head **31**, and a threaded portion **34** spirally disposed on the shank **32**. The drilling portion **33** can be formed with a sharp point (illustrated as an example) or a drilling tip with a groove or grooves.

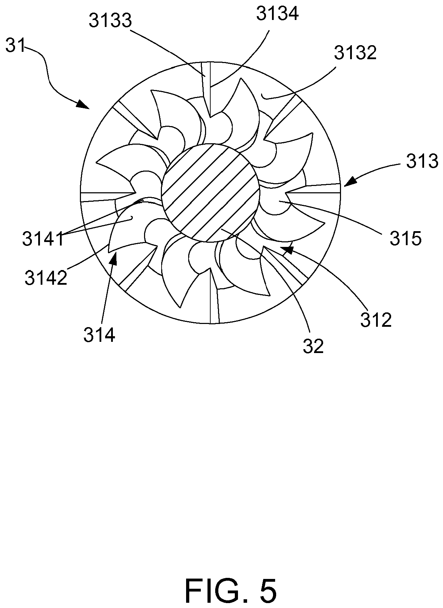

The head **31** has a top face **311** and a bottom face **312** extending from the top face **311** to the shank **32** and formed in a cone shape. On the bottom face **312** are formed a plurality of cutting portions **313**, a plurality of cutting ribs **314** protruding from the bottom face **312** and extending radially relative to the shank **32**, and a plurality of accommodation rooms **315** formed between the cutting portions **313** and the cutting ribs **314**. Each cutting portion **313** extends circumferentially of the top face **311** towards the shank **32**. It is preferable that the cutting portion **313** extends from the top face **311** and terminates short of the shank **32**. In addition, each cutting portion **313** includes a projecting blade **3131** formed circumferentially of the top face **311** at an outer edge thereof and extending in the direction of the shank **32**, an adjoining wall **3132** and a flank wall **3133** respectively connected to the projecting blade **3131,** and a cutting edge **3134** formed at a junction where the walls **3132, 3133** meet. Each projecting blade **3131** decreases progressively from the top face **311** and becomes tapered in the direction of the shank **32**. Concurrently, the adjoining wall **3132** extends from the cutting edge **3134** of one cutting portion **313** to the flank wall **3133** of another adjacent cutting portion **313**. For example, Figs. **4** and **5** show that the flank wall **3133** has a bottom edge opposite to the cutting edge **3134,** and particularly the adjoining wall **3132** can extend from the cutting edge **3134** of one cutting portion 313 to the bottom edge of another adjacent flank wall **3133.** Thus, the cutting portions **313** are connected one after another, namely are continuously connected. The adjoining wall **3132** may have a flat surface or a curved surface. It is adopted in the preferred embodiments that the adjoining wall **3132** is curved, preferably concavely curved as shown, and the cutting edge **3134** can also be inclined because of the curved adjoining wall **3132.**

The cutting ribs **314** are spaced from each other and extend radially relative to the shank **32**. For example, one end of the cutting rib **314** may be connected to the shank **32** (shown in Fig. **4**) or may be close to but not exactly connected to the shank **32**. As an example in the preferred embodiments, Figs. **3** to **5** illustrate the cutting rib **314** starting from the shank **32**. Further, each cutting rib **314** has two rib walls **3141** protruding from the bottom face **312** and meeting at a rib edge **3142.** The rib wall **3141** can be curved to benefit the cutting operation.

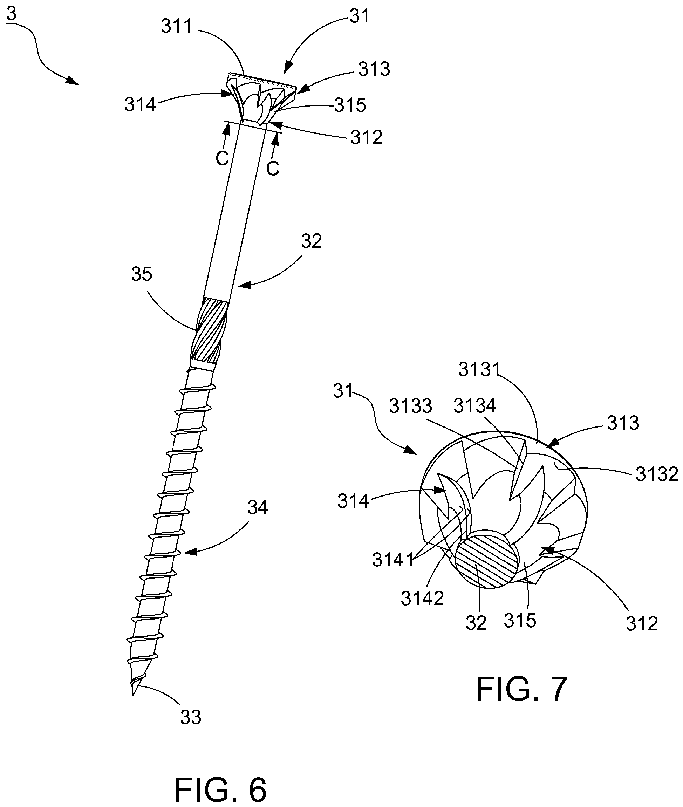

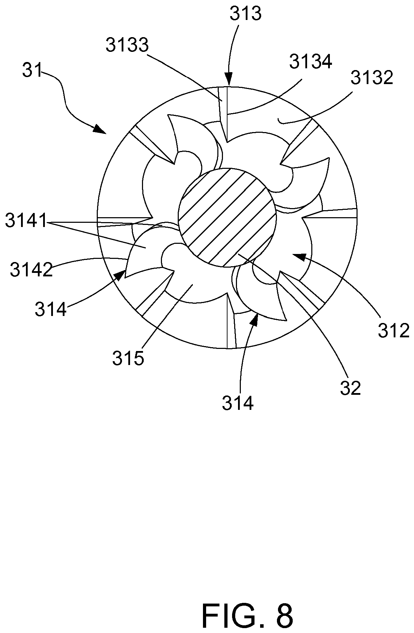

The cutting ribs **314** can extend in a radial direction to be directed at corresponding ones of the cutting portions **313**. For example, as shown in Figs. **3** and **4**, one end of at least one cutting rib **314** extends from the shank **32**, and the other end thereof reaches a corresponding cutting portion **313.** It may be possible that the other end of the cutting rib **314** stops at a point near the cutting portion **313** (not shown). Further, the other end of the cutting rib **314** can touch any wall of the cutting portion **313**, and it is shown as an example in Fig. **5** that each cutting rib **314** reaches each adjoining wall **3132**. Alternatively, as shown in Figs. **6** and **7**, the cutting ribs **314** extend respectively to be directed at part of the cutting portions **313**. This shows that when one ends of the cutting ribs **314** extend radially from the shank **32**, the other ends thereof extend to or toward part of the cutting portions **313** so that between every two adjacent cutting ribs **314** is defined the accommodation room **315** extensively formed from the cutting portion **313** to the shank **32** to enlarge the space (as shown in Fig. **8**). Likewise, the cutting ribs **314** each reach any wall of the corresponding cutting portions **313**, e.g. the adjoining wall **3132,** as shown in Fig. **8**, or terminate short of the cutting portions **313** (not shown) . The arrangement of Fig. **6** will be described as an example in the following operation. Furthermore, the curved shape of the adjoining wall **3132** helps enlarge the space of the accommodation room **315**.

In this preferred embodiment, a helical portion **35** can be formed on the shank **32**, preferably formed between the threaded portion **34** and the head **31**. The helical portion **35** is inclined by a leading angle different from a spiral angle of the threaded portion **34** to follow the threaded portion **34** and continue the drilling action.

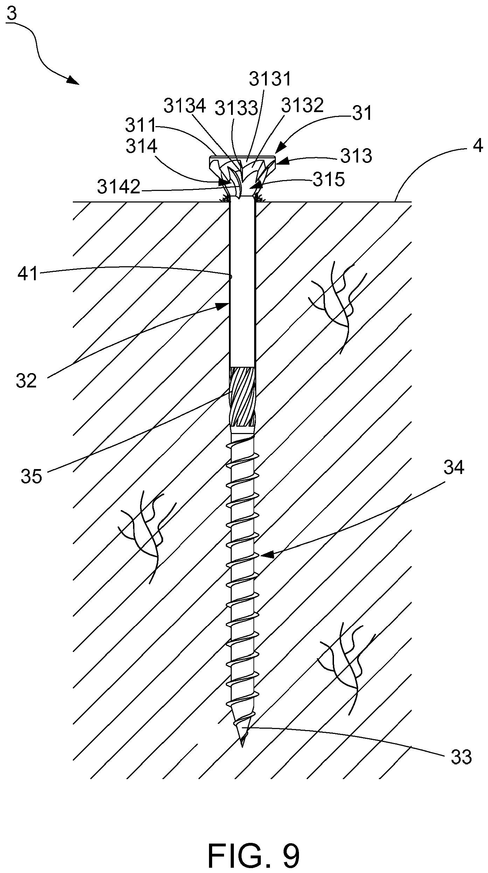

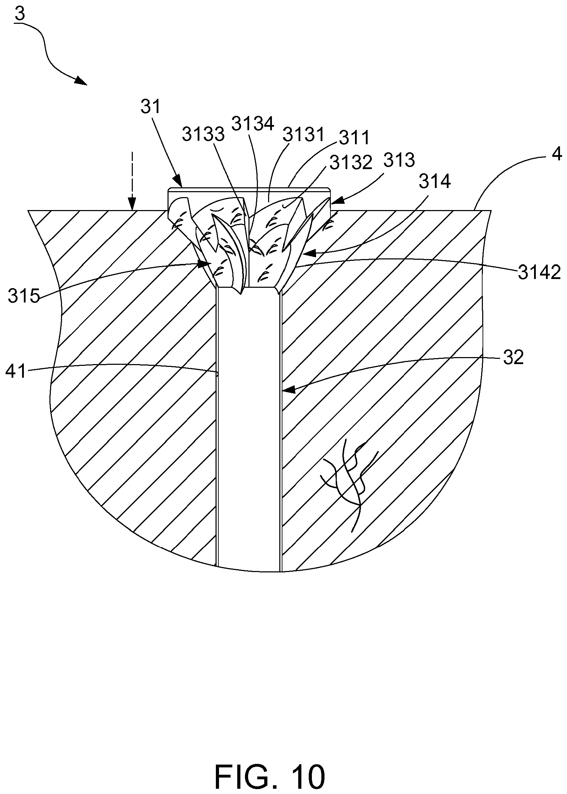

Referring to Fig. **9**, when a driving tool (not shown) is engaged with the head **31** and a driving torque is added to the fastener **3**, the drilling portion **33** and the threaded portion **34** start drilling into a workpiece **4** such as a hardwood to form a bore **41** on a surface of the workpiece **4** and concurrently cutting fibers of the workpiece **4** into chips to thereby drill the shank **32** into the workpiece **4** quickly. As the helical portion **35** follows the drilling track of the threaded portion **34** and enters the workpiece **4**, the helical portion **35** engages with an inner wall of the workpiece **4** firmly because of its leading angle different from the spiral angle of the threaded portion **34** and the elasticity of the cut materials. This arrangement allows the chips to be inwardly pressed and attains an anti-loosening effect. When head **31** advances and touches the surface of the workpiece **4**, the rib edges **3142** of the cutting ribs **314** subject the fibers left around the bore **41** to a cutting operation. In other words, the rib edges **3142** cuts and severs unbroken fibers escaping from the threaded portion **34** into small chips firstly and also enlarges the bore **41** progressively to become a countersunk hole, as shown in Fig. **10**. The cutting edges **3134** follow the rib edges **3142** to continue cutting and shaving chips. Thus, the cutting edges **3134** cooperate with the rib edges **3142** to attain a double cutting effect. This ensures that the fibers are well cut and scraped off, prevents the head **31** from being subjected to the undue entanglement of the fibers, and prevents a drilling resistance caused by the entanglement of the fibers.

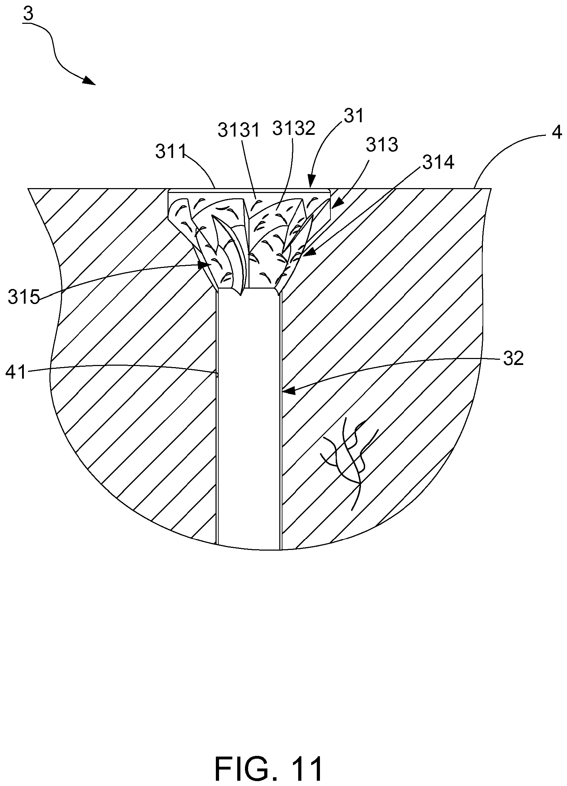

When the head **31** continues the cutting action, redundant chips run gradually along the adjoining wall **3132** and are ejected from the workpiece **4** to prevent an undue accumulation of chips from pressurizing the workpiece **4**, reduce the resistance and prevent the workpiece **4** from cracking. The enlarged space of the accommodation room **315** also receives more chips to increase the engagement between the fastener **3** and the workpiece **4**. As shown in Fig. **9**, it is possible that when the head **31** is gradually screwed into the bore **41**, remnants such as burrs may be produced because of the fibers or chips forced out of the workpiece **4** during the rotation of the fastener **4** or at least a bulge may stick out from the surface of the workpiece **4**. The extension of the projecting blade **3131** presses the burrs and the bulge downwards to make them move down back into the bore **41** of the workpiece **4**, as arrowed in Fig. **10**. Therefore, the top face **311** of the head **31** lies flush with the surface of the workpiece **4**, as shown in Fig. **11**, to promote the evenness after the head **31** completes the entire drilling action and reaches its countersunk position and to increase the engagement between the fastener **3** and the workpiece **4**.

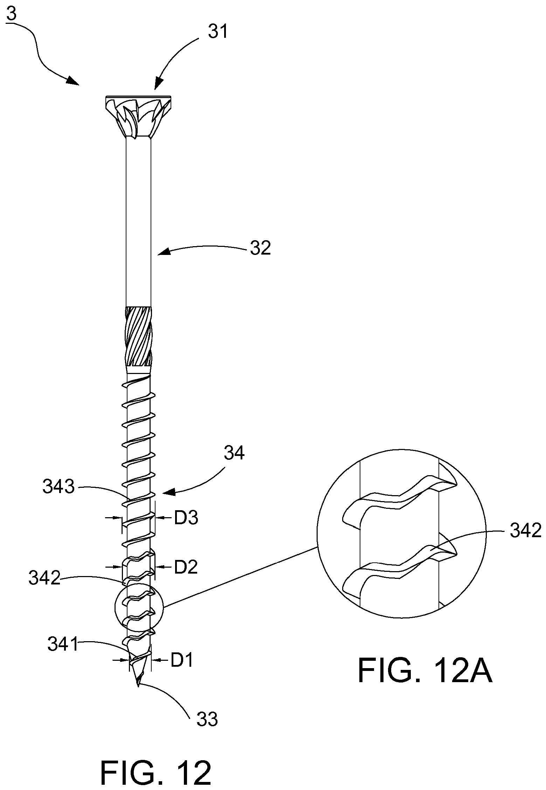

Fig. **12** shows a second preferred embodiment of this invention whose correlated elements are the same as the first preferred embodiment. This embodiment is characterized in that the threaded portion **34** includes a first thread section **341** spirally disposed on the drilling portion **33**, a second thread section **342** following the first thread section **341**, and a third thread section **343** following the second thread section **342**. Preferably, the three thread sections can be connected in sequence to construct a single convolution, as shown. Particularly, the second thread section **342** provides a thread crest lying like waves rising and falling, as shown in Fig. **12A**. Further, the second thread section **342** has a second maximum outer diameter **D2** smaller than a third maximum outer diameter **D3** of the third thread section **343** and larger than a first maximum outer diameter **D1** of the first thread section **341**.

The cooperation between the three thread sections with different outer diameters benefits a good drilling and fastening effect. Specifically, the first thread section **341** assists the drilling portion **33** in performing a pilot drilling operation. The second thread section **342** moves along a drilling track created by the first thread section **341** and uses its wavy crest to continue cutting. In other words, the wavy second thread section **342** increases cutting points to enhance the cutting capability and reduce resistance. The wavy arrangement also benefits removal of redundant chips and allows a certain amount of chips to stay among the second thread section **342** to thereby attain an anti-loosening effect and prevent cracks in the workpiece. The second maximum outer diameter **D2** larger than the first maximum outer diameter **D1** also helps a reaming action and allows the chips to move upwards to the third thread section **343**. When the third thread section **343** with the third maximum outer diameter **D3** is gradually drilled into the workpiece, partial chips coming from the second thread section **342** can be pressed inwards to enhance the engagement between the third thread section **343** and the workpiece (not shown in Fig. **12**). Therefore, the threaded portion **34** with different types of thread sections **341**, **342**, **343** allows the fastener **3** to be quickly drilled into the workpiece, reduces resistance during the drilling operation, and contributes to improved forces preventing the fastener **3** from being pulled out of the workpiece. By this arrangement, an undue accumulation of chips is avoided, and the workpiece such as a hardwood does not crack easily. This also benefits the effect of fitting the head **31** level with the workpiece and helps a stable fastening effect.

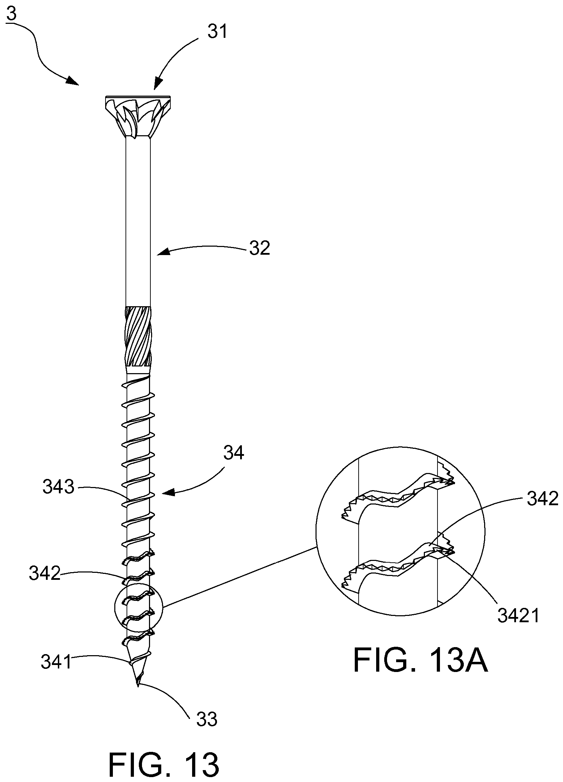

Fig. **13** shows a third preferred embodiment of this invention whose correlated elements are the same as the second preferred embodiment. This embodiment is characterized in that threads of the second thread section **342** are each provided with a plurality of notches **3421,** and the notches **3421** are formed along the wavy form of the second thread section **342** to be open in different directions. These notches 3421 can be in a continuous connection to become serrated as shown in Fig. **13A**, or be spaced from each other. Accordingly, the notches **3421** provides multiple cutting points to increase the cutting ability of the threaded portion **34**, speed up the cutting and drilling operation and help removal of chips. The friction resistance and torque generated during the drilling operation can be greatly reduced. Cut materials like chips can also be received within the notches **3421** to enhance the engagement between the fastener **3** and the workpiece (not shown in Fig. **13**), thereby increasing the ability of resisting the pulling-out force. This also benefits the effect of fitting the head **31** level with the workpiece and helps a stable fastening effect.

To sum up, this invention takes advantages of cutting portions and cutting ribs formed on the bottom face to subject unbroken fibers coming from the threaded portion to a continuous cutting and shaving action, thereby reducing the drilling resistance. Accommodation rooms formed between the cutting portions and the cutting ribs also receive sufficient chips to increase the engagement between the fastener and the workpiece. Remnants, burrs and the bulge sticking out from the workpiece can be fully pressed down into the bore by the projecting blade formed circumferentially of the top face when the head is cutting its way into the workpiece. After the head is completely screwed into the workpiece, the entire head lies flush with the surface of the workpiece to promote the evenness, and the fastening effect is increased.

## Claims

1. A fastener (3) comprising a head (31), a shank (32) extending axially from said head (31) and providing a drilling portion (33) opposite to said head (31), and a threaded portion (34) spirally disposed on said shank (32), said head (31) having a top face (311) and a conical bottom face (312) extending from said top face (311) to said shank (32);
wherein said head (31) includes a plurality of cutting portions (313) formed on said bottom face (312), a plurality of cutting ribs (314) protruding from said bottom face (312), and a plurality of accommodation rooms (315) formed between said plurality of cutting portions (313) and said cutting ribs (314), each of said plurality of cutting portions (313) extending from said top face (311) towards said shank (32),
**characterized in that** each of said plurality of cutting portions (313) including a projecting blade (3131) formed circumferentially of said top face (311) at an outer edge thereof and extending in the direction of said shank (32), wherein said projecting blade (3131) decreases progressively in the direction of said shank (32), each of said plurality of cutting portions (313) further including an adjoining wall (3132) and a flank wall (3133) respectively connected to said projecting blade (3131) and a cutting edge (3134) formed at a junction of said adjoining wall (3132) and said flank wall (3133), a bottom edge on said flank wall (3133)being defined opposite to said cutting edge (3134), each of said adjoining walls (3132) extending from said cutting edge (3134) of one cutting portion (313) to said bottom edge of said flank wall (3133) of another adjacent cutting portion (313) so that each of said adjoining walls (3132) extends circumferentially along each of said projecting blades (3131) to thereby extend each of said plurality of accommodation rooms (315) from each of said adjoining walls (3132) to said shank (32), said plurality of cutting ribs (314) projecting from said bottom face (312) and extending radially between said cutting portions (313) and said shank (32) to be directed at corresponding ones of said plurality of cutting portions (313), each of said cutting ribs (314) having two rib walls (3141) protruding from said bottom face (312) and meeting at a rib edge (3142).

2. The fastener (3) according to claim 1, wherein at least one of said plurality of cutting ribs (314) extends to be directed at a corresponding one of said plurality of cutting portions (313).

3. The fastener (3) according to claim 1 or 2, wherein said plurality of cutting ribs (314) extend respectively to be directed at part of said plurality of cutting portions (313), each of said accommodation rooms (315) being extensively formed from said cutting portion (313) to said shank (32) and formed between two adjacent cutting ribs (314).

4. The fastener (3) according to any of claims 1 to 3, wherein said threaded portion (34) includes a first thread section (341) spirally disposed on said drilling portion (33), a second thread section (342) following said first thread section (341) and formed in a wavy arrangement, and a third thread section (343) following said second thread section (342), said second thread section (342) having a second maximum outer diameter (D2) smaller than a third maximum outer diameter (D3) of said third thread section (343).

5. The fastener (3) according to claim 4, wherein threads of said second thread section (342) each are provided with a plurality of notches (3421).

6. The fastener (3) according to any of claims 1 to 5, wherein a helical portion (35) is formed between said threaded portion (34) and said head (31).

7. The fastener (3) according to any of claims 1 to 6, wherein said two rib walls (3141) of said cutting ribs (314) are curved.

8. The fastener (3) according to any of claims 1 to 7, wherein said adjoining wall (3132) is a curved wall.

## Patentansprüche

1. Befestigungsmittel (3), einen Kopf (31), einen Schaft (32), der sich von dem Kopf (31) axial erstreckt und einen Bohrabschnitt (33) gegenüber dem Kopf (31) bereitstellt, und einen Gewindeabschnitt (34) umfassend, der spiralförmig an dem Schaft (32) angeordnet ist, wobei der Kopf (31) eine Oberseite (311) und eine konische Unterseite (312) aufweist, die sich von der Oberseite (311) zu dem Schaft (32) erstreckt,
wobei der Kopf (31) mehrere Schneideabschnitte (313), die auf der Unterseite (312) gebildet sind, mehrere Schneiderippen (314), die aus der Unterseite (312) hervorstehen, und mehrere Aufnahmeräume (315), die zwischen den mehreren Schneideabschnitten (313) und den Schneiderippen (314) gebildet sind, beinhaltet, wobei sich jeder der mehreren Schneideabschnitte (313) von der Oberseite (311) hin zu dem Schaft (32) erstreckt,
**dadurch gekennzeichnet, dass** jeder der mehreren Schneideabschnitte (313) eine hervorstehende Klinge (3131) beinhaltet, die umlaufend um die Oberseite (311) an ihrer Außenkante gebildet ist und sich in der Richtung des Schafts (32) erstreckt, wobei die hervorstehende Klinge (3131) in Richtung des Schafts (32) fortschreitend abnimmt, wobei jeder der mehreren Schneideabschnitte (313) ferner eine angrenzende Wand (3132) und eine Flankenwand (3133), die entsprechend mit der hervorstehenden Klinge (3131) verbunden sind, und eine Schneidekante (3134), die an einer Verbindung der angrenzenden Wand (3132) und der Flankenwand (3133) gebildet ist, beinhaltet, wobei gegenüber der Schneidekante (3134) eine Unterkante an der Flankenwand (3133) definiert ist, wobei sich jede der angrenzenden Wände (3132) von der Schneidekante (3134) eines Schneideabschnitts (313) zu der Unterkante der Flankenwand (3133) eines anderen benachbarten Schneideabschnitts (313) erstreckt, so dass sich jede der angrenzenden Wände (3132) umlaufend entlang jeder der hervorstehenden Klingen (3131) erstreckt, um dadurch jeden der mehreren Aufnahmeräume (315) von jeder der angrenzenden Wände (3132) zu dem Schaft (32) zu erstrecken, wobei die mehreren Schneiderippen (314) von der Unterseite (312) hervorstehen und sich radial zwischen den Schneideabschnitten (313) und dem Schaft (32) derart erstrecken, dass sie auf entsprechende der mehreren Schneideabschnitte (313) gerichtet sind, wobei jede der Schneiderippen (314) zwei Rippenwände (3141) aufweist, die von der Unterseite (312) hervorstehen und sich an einer Rippenkante (3142) treffen.

2. Befestigungsmittel (3) nach Anspruch 1, wobei sich mindestens eine der mehreren Schneiderippen (314) derart erstreckt, dass sich auf einen entsprechenden der mehreren Schneideabschnitte (313) gerichtet ist.

3. Befestigungsmittel (3) nach Anspruch 1 oder 2, wobei sich die mehreren Schneiderippen (314) entsprechend derart erstrecken, dass sie auf einen Teil der mehreren Schneideabschnitte (313) gerichtet sind, wobei jeder der Aufnahmeräume (315) extensiv von dem Schneideabschnitt (313) zu dem Schaft (32) gebildet ist und zwischen zwei benachbarten Schneiderippen (314) gebildet ist.

4. Befestigungsmittel (3) nach einem der Ansprüche 1 bis 3, wobei der Gewindeabschnitt (34) einen ersten Gewindeteilabschnitt (341), der spiralförmig an dem Bohrabschnitt (33) angeordnet ist, einen zweiten Gewindeteilabschnitt (342), der dem ersten Gewindeteilabschnitt (341) folgt und in einer Wellenanordnung gebildet ist, und einen dritten Gewindeteilabschnitt (343), der dem zweiten Gewindeteilabschnitt (342) folgt, beinhaltet, wobei der zweite Gewindeteilabschnitt (342) einen zweiten maximalen Außendurchmesser (D2) aufweist, der kleiner als ein dritter maximaler Außendurchmesser (D3) des dritten Gewindeteilabschnitts (343) ist.

5. Befestigungsmittel (3) nach Anspruch 4, wobei Gewindegänge des zweiten Gewindeteilabschnitts (342) jeweils mit mehreren Kerben (3421) versehen sind.

6. Befestigungsmittel (3) nach einem der Ansprüche 1 bis 5, wobei zwischen dem Gewindeabschnitt (34) und dem Kopf (31) ein schneckenförmiger Abschnitt (35) gebildet ist.

7. Befestigungsmittel (3) nach einem der Ansprüche 1 bis 6, wobei die zwei Rippenwände (3141) der Schneiderippen (314) gewölbt sind.

8. Befestigungsmittel (3) nach einem der Ansprüche 1 bis 7, wobei die angrenzende Wand (3132) eine gewölbte Wand ist.

## Revendications

1. Organe de fixation (3) comprenant une tête (31), une tige (32) s'étendant axialement à partir de ladite tête (31) et fournissant une partie de perçage (33) à l'opposé de ladite tête (31), et une partie filetée (34) disposée en spirale sur ladite tige (32), ladite tête (31) ayant une face supérieure (311) et une face inférieure conique (312) s'étendant de ladite face supérieure (311) à ladite tige (32) ;
ladite tête (31) comprenant une pluralité de parties de coupe (313) formées sur ladite face inférieure (312), une pluralité de nervures de coupe (314) faisant saillie à partir de ladite face inférieure (312), et une pluralité de chambres de réception (315) formées entre ladite pluralité de parties de coupe (313) et lesdites nervures de coupe (314), chacune de ladite pluralité de parties de coupe (313) s'étendant à partir de ladite face supérieure (311) vers ladite tige (32),
**caractérisé par le fait que** chacune de ladite pluralité de parties de coupe (313) comprend une lame en saillie (3131) formée de manière circonférentielle sur ladite face supérieure (311) à un bord externe de celle-ci et s'étendant dans la direction de ladite tige (32), ladite lame en saillie (3131) décroissant progressivement dans la direction de ladite tige (32), chacune de ladite pluralité de parties de coupe (313) comprenant en outre une paroi attenante (3132) et une paroi de flanc (3133) respectivement reliées à ladite lame en saillie (3131) et une arête de coupe (3134) formée à une jonction de ladite paroi attenante (3132) et de ladite paroi de flanc (3133), un bord inférieur sur ladite paroi de flanc (3133) étant défini à l'opposé de ladite arête de coupe (3134), chacune desdites parois attenantes (3132) s'étendant de ladite arête de coupe (3134) d'une partie de coupe (313) audit bord inférieur de ladite paroi de flanc (3133) d'une autre partie de coupe adjacente (313) de telle sorte que chacune desdites parois attenantes (3132) s'étend de manière circonférentielle le long de chacune desdites lames en saillie (3131) pour ainsi étendre chacune de ladite pluralité de chambres de réception (315) de chacune desdites parois attenantes (3132) à ladite tige (32), ladite pluralité de nervures de coupe (314) faisant saillie à partir de ladite face inférieure (312) et s'étendent radialement entre lesdites parties de coupe (313) et ladite tige (32) pour être dirigées vers des parties correspondantes de ladite pluralité de parties de coupe (313), chacune desdites nervures de coupe (314) ayant deux parois de nervure (3141) faisant saillie à partir de ladite face inférieure (312) et se rencontrant à un bord de nervure (3142).

2. Organe de fixation (3) selon la revendication 1, dans lequel au moins une de ladite pluralité de nervures de coupe (314) s'étend pour être dirigée vers une partie correspondante de ladite pluralité de parties de coupe (313) .

3. Organe de fixation (3) selon la revendication 1 ou 2, dans lequel ladite pluralité de nervures de coupe (314) s'étendent respectivement pour être dirigées vers une partie de ladite pluralité de parties de coupe (313), chacune desdites chambres de réception (315) étant formée de manière étendue de ladite partie de coupe (313) à ladite tige (32) et formée entre deux nervures de coupe adjacentes (314) .

4. Organe de fixation (3) selon l'une quelconque des revendications 1 à 3, dans lequel ladite partie filetée (34) comprend une première section de filetage (341) disposée en spirale sur ladite partie de perçage (33), une deuxième section de filetage (342) suivant ladite première section de filetage (341) et formée de manière ondulée, et une troisième section de filetage (343) suivant ladite deuxième section de filetage (342), ladite deuxième section de filetage (342) ayant un deuxième diamètre externe maximal (D2) plus petit qu'un troisième diamètre externe maximal (D3) de ladite troisième section de filetage (343).

5. Organe de fixation (3) selon la revendication 4, dans lequel des filets de ladite deuxième section de filetage (342) comprennent chacun une pluralité d'encoches (3421).

6. Organe de fixation (3) selon l'une quelconque des revendications 1 à 5, dans lequel une partie hélicoïdale (35) est formée entre ladite partie filetée (34) et ladite tête (31).

7. Organe de fixation (3) selon l'une quelconque des revendications 1 à 6, dans lequel lesdites deux parois de nervure (3141) desdites nervures de coupe (314) sont incurvées.

8. Organe de fixation (3) selon l'une quelconque des revendications 1 à 7, dans lequel ladite paroi attenante (3132) est une paroi incurvée.
